# EUROPÄISCHE PATENTSCHRIFT

(11) **EP 0 345 560 B1**
(45) Veröffentlichungstag und Bekanntmachung des Hinweises auf die Patenterteilung: **07.01.1993**
(21) Anmeldenummer: 89109510.1
(22) Anmeldetag: 26.05.1989
(51) Int. Cl.: B23B 27/00, B23B 27/16

(54) **Schneidplatte für die Feinbearbeitung, insbesondere von Bohrungen**
Cutting bits for finishing works especially for bores
Plaquette de coupe pour travaux de finition, en particulier pour alésages

(30) Priorität: 06.06.1988 DE 3819131
(43) Veröffentlichungstag der Anmeldung: 13.12.1989
(73) Patentinhaber: MAPAL Fabrik für Präzisionswerkzeuge Dr. Kress KG, D-73405 Aalen (DE)
(72) Erfinder: Kress, Dieter, Dr., Dipl.-Ing., D-7080 Aalen (DE); Häberle, Friedrich, D-7089 Lauchheim (DE)
(74) Vertreter: Gleiss, Alf-Olav, Dipl.-Ing.

(56) Entgegenhaltungen:
- EP-A- 0 263 302
- CH-A- 590 099
- DE-A- 3 431 601
- GB-A- 951 624
- US-A- 3 383 748
- US-A- 3 733 664
- US-A- 4 626 140
- US-A- 4 705 434

## Beschreibung

Die Erfindung betrifft eine Schneidplatte für die Feinbearbeitung insbesondere von Bohrungen gemäß Oberbegriff des Anspruchs 1.

Die Feinbearbeitung von Bohrungen durch spanende Verfahren wird immer wichtiger, weil dadurch die Nachfolgebearbeitung durch Honen und/oder durch andere zusätzliche Verfahren eingespart werden kann. Besondere Bedeutung kommt bei der Feinbearbeitung dem richtigen Spanfluß und dem daraus resultierenden Spanbruch zu. Dies ist bei der Feinbearbeitung von Bohrungs-Oberflächen deshalb besonders wichtig, weil zu lange, nicht richtig abfließende Späne zu schlechten Oberflächen führen, also die Qualität der bearbeiteten Fläche beeinträchtigen.

Eine Schneidplatte der eingangs genannten Art ist aus der DE-AS 16 02 968 bekannt. Sie dient dazu, sowohl die bei der Grobzerspanung anfallenden Späne als auch sehr schmale, dünne Späne, wie sie bei der Feinbearbeitung anfallen, zu brechen. Es hat sich jedoch herausgestellt, daß das Spanablaufverhalten bei derartigen Schneidplatten nicht optimal ist, so daß häufig eine Nachbearbeitung der erzielten Oberfläche erforderlich ist.

Es ist daher Aufgabe der Erfindung, eine Schneidplatte für die Feinbearbeitung insbesondere von Bohrungen zu schaffen, mit der optimale Oberflächenqualitäten erreichbar sind, so daß sich Nachfolgebearbeitungen erübrigen.

Diese Aufgabe wird bei einer Schneidplatte gemäß Oberbegriff des Anspruchs 1 mit Hilfe der in diesem Anspruch genannten Merkmale gelöst. Dadurch, daß die Spanleitstufen, von den zugehörigen Schneidkanten aus gesehen, konkav gewölbt sind, und dadurch, daß die von den ineinander übergehenden Spanleitstufen gebildete abfallende Kante im Bereich des Schnittpunkts zweier Schneidkanten unmittelbar vor den Schneidkanten in die Spanflächen übergeht, ist stets gewährleistet, daß ein von einer Haupt- und/oder Nebenschneide abfließender Span auf eine konkav gewölbte Spanleitstufe trifft. Dort wird der Span so abgelenkt und gebrochen, daß lange Späne, die den Spanabfluß behindern, sicher vermieden werden, so daß in einem einzigen Feinbearbeitungsgang mit dieser Schneide optimale Oberflächenqualitäten erzielbar sind.

Besonders vorteilhaft ist es, daß die abfallende Kante der ineinander übergehenden Spanleitstufen unmittelbar vor der Schneidkante in die Spanfläche übergeht. Der Span kann also zunächst ohne Beeinflussung der Spanleitstufe von der Schneidkante kommend auf der Spanfläche einlaufen. Es ist aber sichergestellt, daß dann, unabhängig von der Breite des Spanes, stets ein Zusammenwirken mit mindestens einer gewölbten Spanleitstufe gewährleistet ist. Also auch bei dünnen, schmalen Spänen sind optimale Spanleit-und -brechereigenschaften erzielbar, so daß Oberflächenqualitäten erreichbar sind, bei denen sich Nachfolgebearbeitungen erübrigen.

Besonders bevorzugt wird ein Ausführungsbeispiel der Schneidplatte, das sechseckig ausgebildet ist. Dadurch, daß alle Schneiden der Platte identisch ausgebildet sind, können alle Schneidkanten zur Feinbearbeitung von Werkstücken herangezogen werden. Dadurch ergibt sich eine besonders gute Ausnutzbarkeit der Schneidplatte.

Bei einem weiteren bevorzugten Ausführungsbeispiel ist der Querschnitt der Spanleitstufen und der des Bereichs parabelförmig ausgebildet, in dem die Spanleitstufen ineinander übergehen. Dabei steht die Symmetrieachse der Parabel senkrecht auf der gemeinsamen Ebene der Schneidkanten, wobei deren Scheitelpunkt in dieser Ebene liegt. In Verbindung mit den ebenen Spanflächen ergibt sich dadurch ein besonders guter Spanfluß.

Bei der Verwendung einer derartigen Schneidplatte wird diese in einem Feinbearbeitungswerkzeug so eingespannt, daß die als Nebenschneide dienende Schneidkante praktisch parallel zur Wand der zu bearbeitenden Bohrung verläuft.

Weitere Vorteile und Ausgestaltungen der Erfindung ergeben sich aus den Unteransprüchen.

Die Erfindung wird im folgenden anhand der Figuren näher erläutert. Es zeigen:
Figur 1 eine Draufsicht auf die Vorderseite der Schneidplatte;
Figur 2 einen Querschnitt durch die Schneidplatte entlang der in Figur 1 eingezeichneten Linie II-II;
Figur 3 verschiedene Teil-Querschnitte durch die Spanleitstufe der Schneidplatte;
Figur 4 einen Längsschnitt durch die Spanleitstufe der Schneidplatte;
Figur 5 die Schneidplatte im Eingriff mit einer im Schnitt dargestellten Bohrungswand und
Figur 6 eine vergrößerte Darstellung einer Ecke einer Schneidplatte, wobei in Figur 6a ein Anschnitt und in Figur 6b ein Radius vorgesehen ist.

Grundsätzlich kann die Schneidplatte fünf- oder sechseckig ausgebildet sein. Sie kann auch noch mehr Ecken aufweisen. Im folgenden wird beispielhaft eine sechseckige Schneidplatte beschrieben.

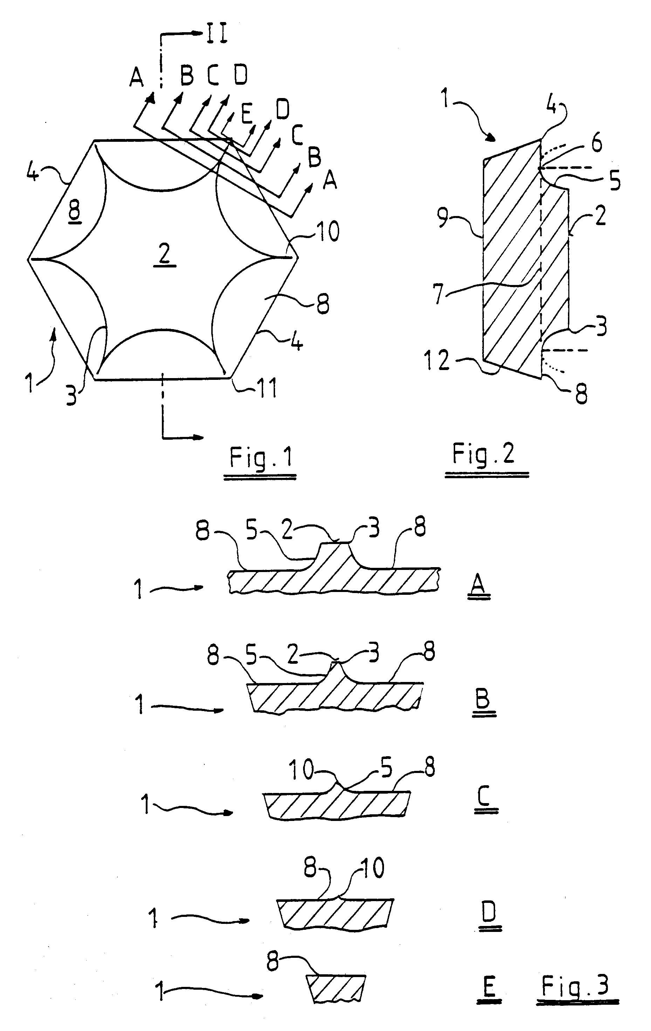

Aus der Draufsicht in Figur 1 ist ersichtlich, daß die Schneidplatte 1 als gleichförmiges Sechseck ausgebildet ist, dessen Außenkanten die Schneidkanten bilden. Sie weist eine sternförmig ausgebildete Erhebung 2 auf, deren Begrenzungskanten 3 vorzugsweise kreisbogenförmig ausgebildet sind. Die einzelnen Begrenzungskanten sind bezüglich der Außenkanten der Schneidplatte 1 konkav, vorzugsweise kreisbogenförmig ausgebildet, sie gehen daher unter einem spitzen Winkel ineinander über, wobei diese Übergangsbereiche jeweils an den Ecken der Schneidplatte angeordnet sind. Die Erhebung 2 ist also als sechsarmiger Stern ausgebildet.

Der Übergang von der Erhebung 2 zu den Außen- bzw. Schneidkanten 4 der Schneidplatte ist nicht rechteckig, sondern bogenförmig ausgebildet. Vorzugsweise sind die seitlichen Begrenzungsflächen 5, also die als Spanleitstufen dienenden Seitenwände der Erhebung 2, parabelförmig gebogen, wobei der Scheitelpunkt 6 der Parabel auf der Verbindungsebene 7 der Schneidkanten 4 liegt.

Der zwischen dem Scheitelpunkt 6 der Parabel und den Schneidkanten 4 liegende Bereich der Schneidplatte 1, die Spanfläche 8, ist eben ausgebildet; sie verläuft praktisch parallel zur Oberfläche der Erhebung 2 bzw. zur Rückseite 9 der Schneidplatte 1. Die Spanfläche 8 liegt in der Verbindungsebene 7. Dies ergibt sich aus der Schnittdarstellung in Figur 2. Die Oberfläche der Erhebung 2 liegt etwa 1mm über der Verbindungsebene 7 bzw. über der den Schneidkanten 4 gemeinsamen Ebene. Die Spanfläche 8 kann auch, ausgehend von der Schneidkante 4, unter einem Winkel zur Rückseite 9 der Schneidplatte 1 abfallen, so daß dann ein Spanwinkel entsteht. Die Schneidkanten liegen dabei, wie oben beschrieben, in einer Ebene.

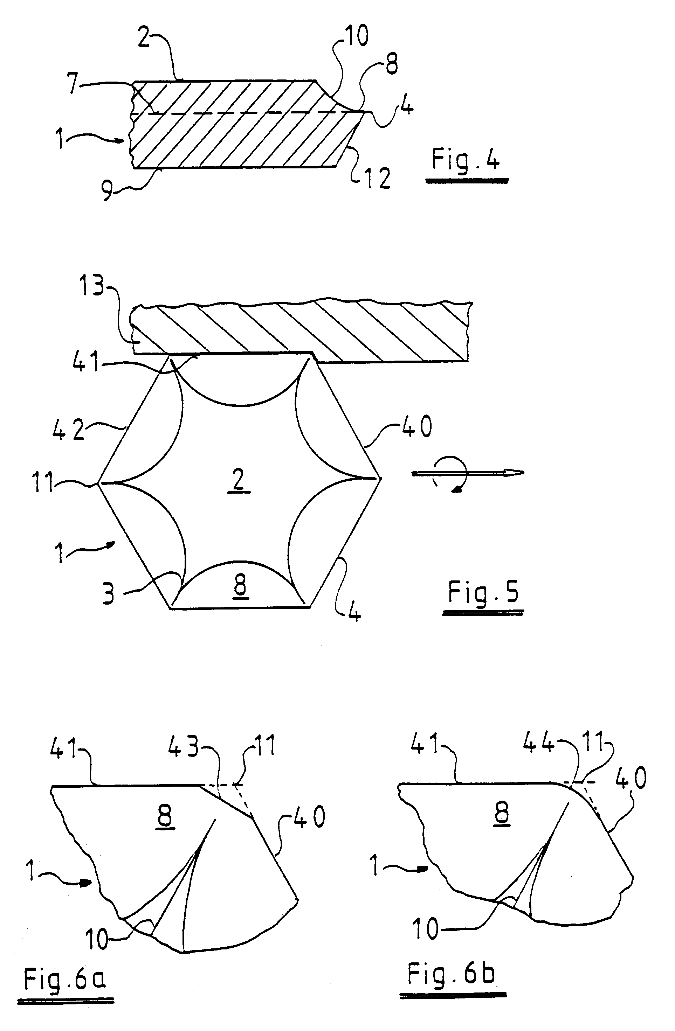

Am Übergang zweier Begrenzungskanten 3 ergibt sich aufgrund der parabelförmigen Ausbildung der seitlichen Begrenzungsflächen 5 eine ebenfalls als Spanleitstufe wirkende parabelförmig abfallende Kante 10, die in Figur 4 besonders deutlich erkennbar ist. Die Kante 10 verläuft genau in der Winkelhalbierenden zweier benachbarter Schneidkanten. Die Krümmung der Kante 10 ist geringer als die der seitlichen Begrenzungsflächen 5. Wenige Mikrometer vor der Außenkante der Schneidplatte 1 geht die von der Erhebung 2 abfallende Kante 10 in die Verbindungsebene 7 bzw. in die Spanfläche 8 über. Dies ergibt sich aus der Folge der in Figur 3 gezeigten Teilquerschnitte durch die abfallende Kante 10.

In den Figuren 2 und 4 ist dargestellt, daß sich an die Schneidkante 4 eine vorzugsweise geneigte Freifläche 12 anschließt, die in die Rückseite 8 der Messerplatte übergeht.

In Figur 5 ist skizzenhaft dargestellt, wie die Schneidplatte 1 mit der Wandung 13 einer zu bearbeitenden Bohrung in Eingriff tritt. Dazu wird die Messerplatte 1 in ein hier nicht dargestelltes Werkzeug eingespannt, welches sich in Figur 5 von links nach rechts vorwärtsbewegt und dabei, in Vorschubrichtung gesehen, im Uhrzeigersinn dreht. Die dabei in Vorschubrichtung weisende Schneidkante der Messerplatte 1 dient als Hauptschneide 40, die unter einem Winkel von 120° dazu verlaufende Schneidkante als Nebenschneide 41. Aus der Darstellung ist ersichtlich, daß die Nebenschneide im wesentlichen parallel zur Wand 13 der zu bearbeitenden Bohrung verläuft. Vorzugsweise fällt sie vom Schnittpunkt 11 aus gesehen, von rechts nach links ab, und zwar ca. 1µm auf einen Millimeter. Dadurch ist die Schneidplatte besonders für die Feinbearbeitung von Bohrungen geeignet, auch weil die Nebenschneide als Gerade ausgebildet ist. Überdies ist wichtig, daß sie in einer Ebene, nämlich in der Verbindungsebene 7 mit der Hauptschneide 40 liegt. Die Schneidplatte 1 muß so in dem Feinbearbeitungswerkzeug festgespannt werden, daß die Verbindungsebene 7 durch die Mittelachse der bearbeiteten Bohrung verläuft.

In dem Bereich der Nebenschneide, der sich unmittelbar an die Hauptschneide anschließt, werden auch Späne abgehoben, deren Dicke bis auf wenige µm heruntergeht und deren Länge von der Spandicke und vom Abstand der Spanleitstufe von der Schneidkante abhängt. Gerade in diesem Bereich entstehen dann sehr lange und dünne Späne, die sich äußerst störend im Arbeitsablauf bemerkbar machen. Zu lange, nicht richtig abfließende Späne führen nämlich zu einem Spanstau und zu Beschädigungen an der bearbeiteten Oberfläche; das heißt also, die Qualität der bearbeiteten Flächen wird beeinträchtigt. Auch diese Späne werden von der Spanleitstufe gebrochen.

Wesentlich bei der Feinbearbeitung von Oberflächen ist, daß die Schneiden an dem Schnittpunkt 11 einen weichen Übergang aufweisen. Dieser ist dadurch erreichbar, daß ein Anschnitt 43 an dem Schnittpunkt 11 angebracht wird oder daß die Schneidplatte 1 im Bereich des Schnittpunkts 11 mit einem Radius 44 angeschliffen wird. Die Schärfe der Schneiden muß dabei auch im Bereich des Anschnitts bzw. des Radius' erhalten bleiben. In Figur 6 ist die Ecke einer Schneidplatte 1 vergrößert dargestellt, um den sanften Übergang zwischen Hauptschneide 40 und Nebenschneide 41 zu verdeutlichen. Teile, die anhand der Figuren 1 bis 5 beschrieben wurden, sind mit identischen Bezugszeichen versehen, so daß auf ihre ausführliche Beschreibung hier verzichtet werden kann.

Figur 6a zeigt einen im Bereich des Schnittpunktes 11 zweier Schneidkanten 40 und 41 vorgesehenen Anschnitt 43, der im wesentlichen senkrecht zur Winkelhalbierenden der beiden Schneidkanten verläuft. Der Anschnitt 43 ist Teil der Hauptschneide 40; er ist in Vorschubrichtung der Schneidplatte unter einem Winkel von 30° geneigt.

In Figur 6b ist eine Schneidplatte 1 dargestellt, die im Bereich des Schnittpunktes 11 zweier Schneiden 40 und 41 einen Radius 44 aufweist, dessen Krümmungsmittelpunkt möglichst auf der Winkelhalbierenden der beiden Schneidkanten liegt.

Durch den Anschnitt 43 bzw. den Radius 44 wird ein sanfter Übergang zwischen den Schneidkanten erreicht. Der Schneidkantenradius im Bereich des Anschnitts 43 bzw. des Radius 44 ist identisch mit dem der übrigen Schneidkanten.

In dem sich unmittelbar an die Nebenschneide 41 anschließenden Bereich der Hauptschneide 40, also im Bereich des sanften Übergangs, werden ebenfalls sehr dünne Späne von der Bohrungswand abgehoben. Diese Späne können auch sehr lang werden und damit ebenfalls den Arbeitsablauf beeinträchtigen.

Durch die als Spanleitstufen dienenden seitlichen Begrenzungsflächen 5 der Erhebung 2 werden diese langen, dünnen Späne, die für die Feinbearbeitung von Werkstücken üblich sind, gebrochen. Dabei ist es besonders wichtig, daß die abfallende Kante 10 der Erhebung 2 bis auf wenige µm an den Schnittpunkt 11 von Haupt- und Nebenschneide bzw. an den Anschnitt 43 oder den Radius 44 herangeführt ist, daß aber auch hier in unmittelbarer Nähe der Schneide eine ebene Spanfläche 8 vorhanden ist, was aus der untersten Darstellung in Figur 3 deutlich hervorgeht. Durch die parabelförmig ausgebildeten seitlichen Begrenzungsflächen 5 und durch die ebenfalls parabelförmig verlaufende abfallende Kante 10, die ebenfalls als Spanleitstufe dient, ergeben sich besonders gute Spanbrecheigenschaften der Schneidplatte 1. Überdies ist eine derartig ausgebildete Schneidplatte außerordentlich stabil, was zu besonders guten Oberflächenqualitäten bei den bearbeiteten Bohrungen führt.

Dadurch, daß die Schneidplatte 1 symmetrisch ausgebildet ist, können alle Schneidkanten 4 der Schneidplatte 1 für die Bearbeitung von Bohrungswänden herangezogen werden. Wenn die mit der Bohrungswand 13 in Eingriff stehenden Schneidkanten 40 und 41 der in Figur 5 dargestellten Schneidplatte 1 abgenutzt sind, so wird diese z.B. gegen den Uhrzeigersinn gedreht, so daß die bisher als Nebenschneide wirkende Schneide als Hauptschneide in Vorschubrichtung weist. Die im Gegenuhrzeigersinn zur Nebenschneide 41 benachbarte Schneidkante 42 dient dann als Nebenschneide. Nach und nach können damit sämtliche Schneiden der Schneidplatte 1 genutzt werden.

Ein in der Praxis bewährtes Ausführungsbeispiel einer Schneidplatte 1, die sich durch einen besonders guten Spanbruch und damit durch kleine Späne bei der Bearbeitung von Bohrungswänden auszeichnete, hatte folgende Maße:
Der alle Außenkanten bzw. Schneidkanten 4 der Schneidplatte 1 tangierende Innenradius hatte einen Durchmesser von 6mm. Die Spanleitstufen bzw. seitlichen Begrenzungskanten 5 der Erhebung 2 hatten einen Krümmungsradius von 2mm, wobei der Mittelpunkt des Krümmungsradius' jeweils 1mm außerhalb der Schneidkante 4 der Schneidplatte 1 lag.

## Patentansprüche

1. Als symmetrisches Vieleck ausgebildete Schneidplatte für die Feinbearbeitung, insbesondere von Bohrungen, mit gradlinig verlaufenden Seitenkanten, die als Haupt- bzw. Nebenschneiden bildende Schneidkanten dienen und in einer gemeinsamen Ebene angeordnet sind, sowie mit einer von Spanflächen der Schneiden ausgehenden Erhebung, deren Flanken als Spanleitstufen dienen, wobei die Spanleitstufen benachbarter Schneidkanten ineinander übergehen und eine abfallende Kante bilden, die in Richtung auf die gemeinsame Ebene abfällt, **dadurch gekennzeichnet**, daß die Spanleitstufen (5), jeweils von den zugehörigen Schneidkanten (4) aus gesehen, konkav gewölbt sind, daß die abfallende Kante (10) im Bereich des Schnittpunktes (11) zweier Schneidkanten (4) unmittelbar vor den Seitenkanten in die Spanfläche (8) übergeht, und daß der Mittelpunkt des Krümmungsradius' der Spanleitstufen außerhalb der Schneidplatte (1) liegt.

2. Schneidplatte nach Anspruch 1, **gekennzeichnet durch** mindestens fünf, vorzugsweise sechs Ecken und sechs Schneiden (4).

3. Schneidplatte nach Anspruch 2, **dadurch gekennzeichnet**, daß alle Schneiden (4) identisch ausgebildet sind.

4. Schneidplatte nach einem der Ansprüche 1 bis 3, **dadurch gekennzeichnet**, daß im Bereich der Schnittpunkte (11) der Schneidkanten (4) ein Anschnitt (43) oder ein Radius (44) vorgesehen ist, so daß ein sanfter Übergang von Schneide zu Schneide besteht.

5. Schneidplatte nach Anspruch 1, **dadurch gekennzeichnet**, daß der Querschnitt der Spanleitstufen (5) und der der abfallenden Kante (10) die Form einer Parabel hat, deren Symmetrieachse senkrecht auf der gemeinsamen Ebene (7) der Schneidkanten (4) steht und deren Scheitelpunkt (6) in dieser Ebene (7) liegt.

6. Schneidplatte nach Anspruch 5, **dadurch gekennzeichnet**, daß die Kante (10) auf der Winkelhalbierenden zweier benachbarten Schneidkanten (4) verläuft.

7. Schneidplatte nach Anspruch 5 oder 6, **dadurch gekennzeichnet**, daß die Spanleitstufen (5) steiler abfallen als die Kante (10).

8. Schneidplatte nach Anspruch 1, **dadurch gekennzeichnet,** daß die zwischen Schneidkante (4) und Spanleitstufe (5) liegende Spanfläche (8) als Ebene ausgebildet ist.

9. Schneidplatte nach Anspruch 8, **dadurch gekennzeichnet,** daß die ebenen Spanflächen (8) in der den Schneidkanten (4) gemeinsamen Ebene (7) liegen.

10. Verwendung einer Schneidplatte nach einem der Ansprüche 1 bis 9 zur Feinbearbeitung von Flächen, insbesondere von Bohrungen, **dadurch gekennzeichnet**, daß die Schneidplatte (1) in einem Feinbearbeitungswerkzeug so eingespannt ist, daß die als Nebenschneide (41) dienende Schneidkante (4) praktisch parallel zur Wand (13) der zu bearbeitenden Bohrung verläuft.

11. Verwendung nach Anspruch 10, **dadurch gekennzeichnet,** daß die Nebenschneide (41) entgegen der Vorschubrichtung des Feinbearbeitungswerkzeugs um vorzugsweise 1 µm pro mm abfällt, während die Hauptschneide (40) in Vorschubrichtung geneigt ist.

## Claims

1. A cutting bit formed as a symmetrical polygon for finishing work, in particular for bores, having straight lateral edges which serve as cutting edges forming primary or secondary cutting edges and which are arranged in a common plane, and having an elevation issuing from faces of the cutting edges, the flanks of the said elevation serving as chip breakers, wherein the chip breakers of adjacent cutting edges merge and form a sloping edge which slopes in the direction of the common plane, characterised in that the chip breakers (5), in each case viewed from the associated cutting edges (4), are curved in a concave manner, in that the sloping edge (10) merges into the face (8) directly before the lateral edges in the region of the junction (11) of two cutting edges (4), and in that the centre of the radius of curvature of the chip breakers lies outside the cutting bit (1).

2. A cutting bit according to claim 1, characterised by at least five, preferably six corners and six cutting edges (4).

3. A cutting bit according to claim 2, characterised in that all cutting edges (4) are identically formed.

4. A cutting bit according to any one of claims 1 to 3, characterised in that a chamfer (43) or a radius (44) is provided in the region of the junctions (11) of the cutting edges (4), producing a smooth transition from cutting edge to cutting edge.

5. A cutting bit according to claim 1, characterised in that the cross-section of the chip breakers (5) and that of the sloping edge (10) has the form of a parabola, the axis of symmetry of which is perpendicular to the common plane (7) of the cutting edges (4) and the summit (6) of which lies in this plane (7).

6. A cutting bit according to claim 5, characterised in that the edge (10) extends on the bisector of two adjacent cutting edges (4).

7. A cutting bit according to claim 5 or 6, characterised in that the chip breakers (5) slope more steeply than the edge (10).

8. A cutting bit according to claim 1, characterised in that the face (8) lying between cutting edge (4) and chip breaker (5) is formed as a plane surface.

9. A cutting bit according to claim 8, characterised in that the plane faces (8) lie in the plane (7) common to the cutting edges (4).

10. Utilisation of a cutting bit according to any one of claims 1 to 9 for the finishing of surfaces, in particular of bores, characterised in that the cutting bit (1) is clamped in a finishing tool in such a way that the cutting edge (4) serving as secondary cutting edge (41) extends practically parallel to the wall (13) of the bore to be machined.

11. Utilisation according to claim 10, characterised in that the secondary cutting edge (41) slopes away from the feed direction of the finishing tool preferably by 1 µm per mm, whilst the primary cutting edge (40) is inclined in the feed direction.

## Revendications

1. Plaquette de coupe formée comme un polygone régulier pour l'usinage de précision, en particulier d'alésages, avec des arêtes latérales s'étendant en ligne droite, qui servent d'arêtes de coupe formant les arêtes de coupe principale ou auxiliaire, et sont disposées dans un plan commun, ainsi qu'avec une surélévation partant des surfaces de coupe des tranchants, surélévation dont les flancs servent d'étages de guidage des copeaux, les étages de guidage des copeaux d'arêtes de coupe voisines passent les uns dans les autres et forment une arête inclinée, qui s'incline dans le sens allant vers le plan commun, plaquette de coupe caractérisée en ce que les étages de guidage de copeaux (5), vus respectivement à partir des arêtes de coupes correspondantes (4), sont recourbés de façon concave, en ce que l'arête allant en s'inclinant (10) dans la zone du point d'intersection (11) de deux arêtes de coupe (4) passe directement avant les arêtes latérales dans la surface de coupe (8) et que le centre de courbure des étages de guidage de copeaux se trouve en dehors de la plaquette de coupe (1).

2. Plaquette de coupe selon la revendication 1, caractérisée par au moins cinq, de préférence six sommets et six tranchants (4).

3. Plaquette de coupe selon la revendication 2, caractérisée en ce que tous les tranchants (4) sont formés de façon identique.

4. Plaquette de coupe selon l'une des revendications 1 à 3, caractérisée en ce que dans la zone du point d'intersection (11) des arêtes de coupe (4) il est prévu une entrée (43) ou une courbure (44), de telle sorte que l'on ait un passage doux d'un tranchant à l'autre.

5. Plaquette de coupe selon l'une des revendications 1 à 3, caractérisée en ce que la section transversale des étages de guidage de copeaux (5) et celle de l'arête s'inclinant (10) ont la forme d'une parabole, dont l'axe de symétrie est perpendiculaire au plan commun (7) des arêtes de coupe (4) et dont le sommet (6) se trouve dans ce plan (7).

6. Plaquette de coupe selon la revendication 5, caractérisée en ce que l'arête (10) s'étend sur la bissectrice de deux arêtes de coupe voisines (4).

7. Plaquette de coupe selon la revendication 5 ou 6, caractérisée en ce que les étages de guidage de copeaux (5) sont inclinés de façon plus abrupte que l'arête (10).

8. Plaquette de coupe selon la revendication 1, caractérisée en ce que la surface de coupe (8) se trouvant entre l'arête de coupe (4) et l'étage de guidage des copeaux (5) est formée comme un plan.

9. Plaquette de coupe selon la revendication 8, caractérisée en ce que les surfaces de coupe planes (8) se trouvent dans le plan (7) commun aux arêtes de coupe (4).

10. Utilisation d'une plaquette de coupe selon l'une des revendications 1 à 9 pour l'usinage de précision de surfaces, en particulier d'alésages, caractérisée en ce que la plaquette de coupe (1) est bloquée dans un outil d'usinage de précision de telle façon que l'arête de coupe (4) servant de tranchant auxiliaire (41) s'étend pratiquement parallèlement à la paroi (13) de l'alésage à usiner.

11. Utilisation selon la revendication 10, caractérisée en ce que le tranchant auxiliaire (41) s'incline de 1 x 10¹⁰⁻⁶ m par mm en sens inverse du sens de défilement de l'outil d'usinage de précision, tandis que le tranchant principal (40) est incliné dans le sens du défilement.
